# EUROPÄISCHE PATENTSCHRIFT

(11) **EP 1 624 350 B1**
(45) Veröffentlichungstag und Bekanntmachung des Hinweises auf die Patenterteilung: **02.05.2012**
(21) Anmeldenummer: 04018305.5
(22) Anmeldetag: 02.08.2004
(51) Int. Cl.: G05B 19/042

(54) **Verfahren zur Authentifizierung in einem Automatisierungssystem**
Method for authentication in an automation system
Procédé d'authentification dans un système d'automatisation

(43) Veröffentlichungstag der Anmeldung: 08.02.2006
(73) Patentinhaber: SIEMENS AKTIENGESELLSCHAFT, 80333 München (DE)
(72) Erfinder: Talanis, Thomas, 91336 Heroldsbach (DE); Tröster, Thomas, 91723 Dittenheim (DE); Volkmann, Frank, 90475 Nürnberg (DE)

(56) Entgegenhaltungen:
- EP-A1- 1 180 872
- EP-A1- 1 403 749
- WO-A2-02/095506

## Beschreibung

Die Erfindung betrifft ein Verfahren zur Projektierung eines Automatisierungssystems, ein Verfahren zur Authentifizierung eines Anwenders beim Zugriff auf ein Automatisierungsgerät in einem Automatisierungssystem, ein Automatisierungssystem sowie ein Computerprogramm zur Projektierung eines Automatisierungssystems.

Eine Reihe von Faktoren, wie die fortschreitende Vernetzung und Vereinheitlichung von Automatisierungsknoten und der zunehmende Einsatz von offenen Kommunikationstechnologien aus dem Internetbereich haben die Nachfrage nach automatisierungsspezifischen Sicherheitskonzepten verstärkt. Eine wichtige Randbedingung des Einsatzes einer Sicherheitslösung ist deren Handhabbarkeit (Usability). Komplexe Systeme gelten dabei als potenziell unsicher.

Aus dem Stand der Technik ist es bekannt, für jedes Automatisierungsgerät innerhalb eines Automatisierungssystems eine Anwender-Datenbasis anzulegen. Ein Anwender muss sich bei jedem Automatisierungsgerät neu anmelden. Hierbei werden sowohl verschiedene Anwender-Identifikationen als auch verschiedene Passwörter benötigt. Besonders die Passwörter werden dabei jedoch sehr oft leicht zugänglich hinterlegt und stellen somit ein Sicherheitsrisiko dar.

Aus der europäischen Patentanmeldung EP 1 403 749 A1 ist ein Verfahren zum Austausch von Daten in einem Automatisierungssystem bekannt, bei ein unberechtigter Zugriff auf die Daten durch den Austausch zumindest eines Identifizierungszertifikates zwischen jeweils zwei Steuer- und/oder Bedieneinheiten verhindert wird.

Aufgabe der vorliegenden Erfindung ist es, das Sicherheitskonzept in Automatisierungssystemen zu verbessern. Diese Aufgabe wird durch Verfahren nach den Ansprüchen 1 bzw. 4, durch ein Automatisierungssystem nach Anspruch 7 bzw. durch ein Computerprogramm nach Anspruch 8 gelöst.

Eine Kernidee der Erfindung ist es, ein Single Sign-On-Authentifizierungsverfahren für ein Automatisierungssystem vorzusehen. Ein Anwender wird dadurch in die Lage versetzt, sich mit einer einzigen Authentifizierung an sämtlichen Automatisierungsgeräten innerhalb eines Automatisierungsprojektes gleichzeitig anzumelden.

Ein grundlegender Bestandteil der Erfindung ist es dabei, das Single Sign-On-Verfahren zentral zu projektieren. Mit anderen Worten erfolgt die Bereitstellung der Grundlagen für die spätere Authentifizierung bereits während der Projektierung des Automatisierungsprojektes anhand einer Projektdatenbasis. Diese Vorgehensweise ermöglicht die Realisierung eines Single Sign-On-Verfahrens für das gesamte projektierte Automatisierungssystem und somit zugleich für alle in dem Automatisierungssystem enthaltenen Automatisierungsgeräte.

Die notwendigen Common Secrets zwischen einem während der Projektierung festgelegten Ticket-Agenten und den übrigen Automatisierungsgeräten werden bereits während der Projektierung generiert, wobei dies vorzugsweise automatisch erfolgt. Der Anwender muss während der Projektierung lediglich die Anwender-Datenbasis erstellen und Zugriffsrechte festlegen.

Unter einem Automatisierungsprojekt wird dabei die Projektierung mehrerer, zusammengefasster Steuerungen im Hinblick auf Programmierung, Vernetzung etc. verstanden, wobei jedes Automatisierungsprojekt eine Anzahl von Automatisierungsgeräten umfasst. Ein Automatisierungsgerät kann dabei beispielsweise eine Speicherprogrammierbare Steuerung (SPS) sein.

Unter einer Anwender-Datenbasis wird eine Art Anwender-Liste verstanden, in der neben den Namen der Anwender auch die den Anwendern zugeordneten Passwörter sowie die jeweiligen Rechte der Anwender verzeichnet sind. Diese Angaben können teilweise verschlüsselt sein.

Ein Ticket ist eine vorzugsweise verschlüsselte Information, beispielsweise in Form einer Byte-Folge, welche die Rechte eines Anwenders beschreibt. Ein Ticket gibt dabei vorzugsweise an, wer (Anwender) wann (Zeitpunkt oder -dauer) wo (Automatisierungsgerät oder Dienst) welche Rechte besitzt. Das Ticket kann über kryptografische Mechanismen geprüft (validiert) werden.

Common Secrets bezeichnen die 3gemeinsamen Geheimnisse", die zur Implementierung eines asymmetrischen Verschlüsselungsverfahrens erforderlich sind.

Anwender des Automatisierungssystems kann sowohl ein Mensch oder aber eine Maschine, beispielsweise ein anderes Automatisierungssystem oder aber ein Programmiergerät sein.

Nach der Übertragung der Projektierungsdaten in die Automatisierungsgeräte läuft die Single Sign-On-Authentifizierung wie folgt ab:

Nach der Anmeldung eines Anwenders wird zunächst geprüft, ob dieser über ein Ticket verfügt. Ist dies der Fall, wird das Ticket validiert und der Zugriff auf das Automatisierungsgerät ermöglicht. Verfügt der Anwender über kein Ticket, wird er zu dem Ticket-Agenten umgeleitet und von diesem aufgefordert, sich anzumelden. Das Weiterleiten erfolgt automatisch auf der Basis der projektierten Daten. Nach der Authentifizierung des Anwenders generiert der Ticket-Agent ein Ticket für den gewünschten Dienst. Das Ticket ist dabei vorzugsweise in seiner Gültigkeit zeitlich begrenzt. Nach der Erzeugung des Tickets durch den Ticket-Agenten wird der Anwender zurück auf das Automatisierungsgerät geleitet. Nach der Validierung des Tickets erfolgt dann der Zugriff auf das Automatisierungsgerät.

Das von dem Ticket-Agenten mit seinem privaten Schlüssel signierte Ticket kann mit anderen Worten von jedem Dritten, der den dazugehörigen öffentlichen Schlüssel besitzt, geprüft werden. Durch die Prüfung der Signatur wird mit anderen Worten die Authentizität des Tickets sichergestellt.

Der Ticket-Agent wird vorzugsweise je nach Auslastung der zum Projektierungszeitpunkt freien Ressourcen bestimmt. Hierdurch können die Ressourcen optimal eingesetzt werden.

Eine zusätzliche Client-Software-Installation, beispielsweise um den Einsatz von Cookies in einem Internet-Browser zu erlauben, ist bei dem erfindungsgemäßen Verfahren nicht erforderlich.

Mit der Erfindung ist ein besonders anwenderfreundlicher Zugriff auf Sicherheitsbereiche in der Automatisierungstechnik möglich. So lässt sich beispielsweise auf einfache Art und Weise ein einmaliges Einloggen pro Tag oder pro Schicht umsetzen.

Die Authentifizierung ist gegenüber den aus dem Stand der Technik bekannten Verfahren nicht nur sehr sicher, sondern auch besonders einfach in der Handhabung. Sie lässt sich besonders vorteilhaft auch bei komplexen Automatisierungssystemen einsetzen.

Die Anwendung des erfindungsgemäßen Verfahrens erfolgt vorzugsweise bei Automatisierungssystemen, die Computernetzwerktechnologien, wie beispielsweise das Internet, nutzen. Mit anderen Worten eignet sich das Verfahren besonders für Automatisierungssysteme, bei denen Automatisierungsgeräte (Knoten) miteinander vernetzt sind.

Die vorliegende Erfindung wird nachfolgend anhand eines Ausführungsbeispieles näher erläutert, dass mit Hilfe der Figuren beschrieben wird. Hierbei zeigen:
- FIG 1: eine schematische Darstellung der Erfindung,
- FIG 2: ein die Projektierung eines Automatisierungssystems beschreibendes Ablaufdiagramm,
- FIG 3: ein die Authentifizierung in einem Automatisierungssystem beschreibendes Ablaufdiagramm.

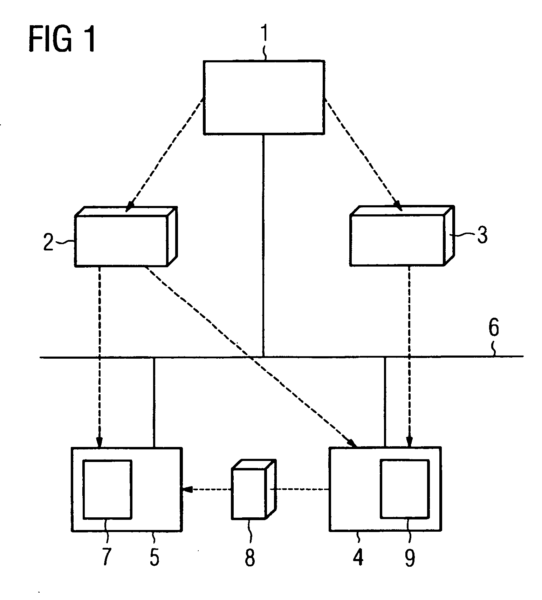

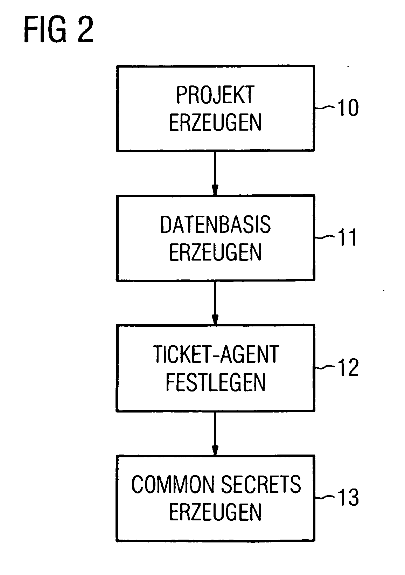

In FIG 1 ist ein Grundaufbau der der Erfindung zugrunde liegenden Hardware schematisch abgebildet. Die Projektierung eines Automatisierungssystems erfolgt mit Hilfe eines Projektierungswerkzeuges 1 derart, dass in einem ersten Schritt 10 das Automatisierungsprojekt 2 erzeugt wird, vgl. FIG 2. In einem weiteren Schritt 11 wird eine Anwender-Datenbasis 3 für das Automatisierungsprojekt 2 erzeugt. Darüber hinaus erfolgt ein Festlegen eines der Automatisierungsgeräte 4 innerhalb des Automatisierungsprojektes 2 als Ticket-Agent 9 (Schritt 12). Mit anderen Worten weist damit das Automatisierungsgerät 4 die Funktionalität eines Ticket-Agenten 9 auf. Schließlich werden die Common Secrets für die spätere Kommunikation zwischen dem Ticket-Agenten 9 und den übrigen Automatisierungsgeräten 5 des Automatisierungsprojektes 2 automatisch erzeugt (Schritt 13). Das Projektierungswerkzeug 1 ist vorzugsweise als Computerprogramm implementiert. Beispielsweise kann ein Step7-Automatisierungswerkzeug zur Projektierung verwendet werden.

Nachdem das Automatisierungsprojekt 2 erzeugt wurde, wird es mittels bekannter Techniken über ein Rechnernetzwerk 6, beispielsweise das Internet, von dem Projektierungswerkzeug 1 in die einzelnen Automatisierungsgeräte 4, 5 des Automatisierungssystems übertragen. Die Anwender-Datenbasis 3 wird zu dem durch die Projektierung als Ticket-Agent 9 bestimmten Automatisierungsgerät 4 übertragen. Diese Übertragungen sind in FIG 1 mit durchbrochenen Linien dargestellt.

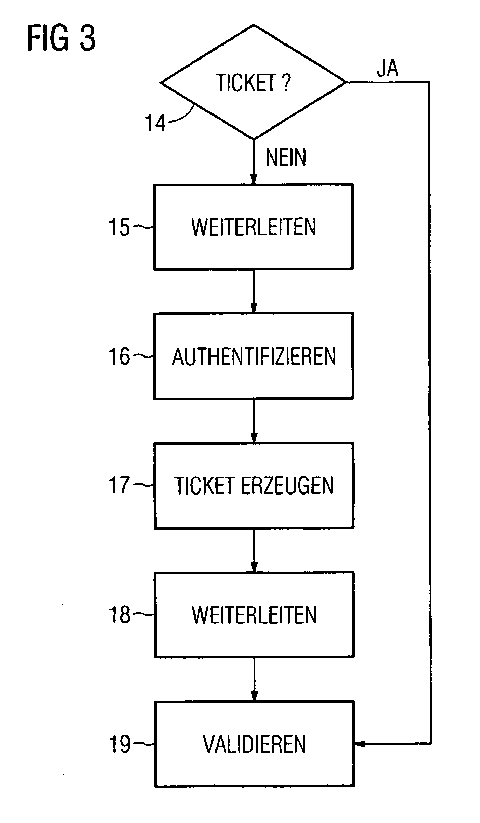

Greift ein Anwender, beispielsweise ein Servicetechniker, auf eines der Automatisierungsgeräte 5 zu, so wird von einem Authentifizierungsmodul 7 des Automatisierungsgerätes in einem ersten Schritt 14 geprüft, ob der Anwender über ein Ticket verfügt, vgl. FIG 3. Ist dies nicht der Fall, erfolgt in Schritt 15 eine automatische Weiterleitung des Anwenders, beispielsweise mittels HTTP-Redirekt, zu dem Ticket-Agenten 9 innerhalb des Automatisierungssystems. Dieser authentifiziert in einem nächsten Schritt 16 den Anwender anhand der Anwender-Datenbasis 3 und erzeugt in Schritt 17 automatisch ein Ticket 8 für den Zugriff auf das Automatisierungsgerät 5. Anschließend leitet der Ticket-Agent 9 den Anwender zurück auf das Automatisierungsgerät 5, auf welches ursprünglich zugegriffen wurde (Schritt Weiterleiten 18). Dort erfolgt dann durch das Authentifizierungsmodul 7 eine Validierung des Tickets 8 (Schritt Validieren 19). In Abhängigkeit von dem Ergebnis der Validierung wird schließlich der Zugriff des Anwenders auf das Automatisierungsgerät 5 bzw. den gewünschten Dienst zugelassen.

Sofern der Anwender bereits über ein gültiges Ticket 8 verfügt, wird er bei einem Zugriff auf das Automatisierungsgerät 5 nicht an den Ticket-Agenten 9 weitergeleitet. Vielmehr erfolgt eine sofortige Validierung durch das Authentifizierungsmodul 7. Ist das durch den Ticket-Agenten 9 am Morgen eines Arbeitstages des Anwenders ausgestellte Ticket 8 beispielsweise acht Stunden gültig, so kann der Anwender innerhalb dieser Zeit mit dem bereits ausgestellten Ticket 8 beliebig oft auf das Automatisierungsgerät 5 zugreifen, ohne das eine erneute Authentifizierung erforderlich ist.

Neben der automatischen Umleitung der Authentifizierung werden bei der Implementierung der vorliegenden Erfindung vorzugsweise folgende Techniken verwendet: Kerberos, Passport, Digest Authentication sowie Hashing.

Zusammengefasst betrifft die Erfindung somit ein Verfahren zur Projektierung eines Automatisierungssystems, ein Verfahren zur Authentifizierung eines Anwenders beim Zugriff auf ein Automatisierungsgerät in einem Automatisierungssystem, ein Automatisierungssystem sowie ein Computerprogramm zur Projektierung eines Automatisierungssystems. Um das Sicherheitskonzept in Automatisierungssystemen zu verbessern wird vorgeschlagen, ein Single Sign-On-Authentifizierungsverfahren für ein Automatisierungssystem vorzusehen. Ein Anwender wird dadurch in die Lage versetzt, sich mit einer einzigen Authentifizierung an sämtlichen Automatisierungsgeräten innerhalb eines Automatisierungsprojektes gleichzeitig anzumelden. Ein grundlegender Bestandteil der Erfindung ist es dabei, das Single Sign-On-Verfahren zentral zu projektieren. Mit anderen Worten erfolgt die grundlegende Bereitstellung der Grundlagen für die spätere Authentifizierung bereits während der Projektierung des Automatisierungsprojektes anhand einer Projektdatenbasis. Diese Vorgehensweise ermöglicht die Realisierung eines Single Sign-On-Verfahrens für das gesamte projektierte Automatisierungssystem und somit zugleich für alle in dem Automatisierungssystem enthaltenen Automatisierungsgeräte.

## Patentansprüche

1. Verfahren zur Projektierung eines Automatisierungssystems, mit den Schritten:
- Erzeugen (10) eines Automatisierungsprojektes (2),
- Erzeugen (11) einer Anwender-Datenbasis (3) für das Automatisierungsprojekt (2),
- Festlegen (12) eines Automatisierungsgerätes (4) innerhalb des Automatisierungsprojektes (2) als Ticket-Agent (9) zum späteren Authentifizieren eines Anwenders beim Zugriff auf ein Automatisierungsgerät (5) in dem Automatisierungssystem,
- Automatisches Erzeugen (13) von gemeinsamen Geheimnissen (Common Secrets), die zur Implementierung eines asymmetrischen Verschlüsselungsverfahrens erforderlich sind, zwischen dem Ticket-Agenten (9) und den Automatisierungsgeräten (5) des Automatisierungsprojektes (2) für deren Kommunikation.

2. Verfahren nach Anspruch 1, mit dem Schritt:
- Zuordnen der Anwender-Datenbasis (3) für das Automatisierungsprojekt (2) zu dem Ticket-Agenten (9).

3. Verfahren nach Anspruch 1 oder 2, mit den Schritt:
- automatisches Bekanntgeben der Adresse des Ticket-Agenten (4) an alle weiteren Automatisierungsgeräte (5).

4. Verfahren zur Authentifizierung eines Anwenders beim Zugriff auf ein Automatisierungsgerät (5) in einem Automatisierungssystem, welches mit Hilfe eines Projektierungsverfahrens mit folgenden Schritten projektiert wurde:
- Erzeugen (10) eines Automatisierungsprojektes (2),
- Erzeugen (11) einer Anwender-Datenbasis (3) für das Automatisierungsprojekt (2),
- Festlegen (12) eines Automatisierungsgerätes (4) innerhalb des Automatisierungsprojektes (2) als Ticket-Agent (9) zum späteren Authentifizieren eines Anwenders beim Zugriff auf ein Automatisierungsgerät (5) in dem Automatisierungssystem,
- Automatisches Erzeugen (13) von gemeinsamen Geheimnissen (Common Secrets), die zur Implementierung eines asymmetrischen Verschlüsselungsverfahrens erforderlich sind, zwischen dem Ticket-Agenten (9) und den Automatisierungsgeräten (5) des Automatisierungsprojektes (2) für deren Kommunikation,
wobei das Verfahren zur Authentifizierung die folgenden Schritte umfasst:
a) Prüfen (14) durch das Automatisierungsgerät (5), ob der Anwender über ein Ticket (8) verfügt,
b) wenn der Anwender über kein Ticket (8) verfügt, Authentifizieren (16) des Anwenders durch den Ticket-Agenten (9) anhand der Anwender-Datenbasis (3), Erzeugen (17) eines Tickets (8) für den Zugriff auf das Automatisierungsgerät (5) durch den Ticket-Agenten (4) und Weiterleiten (18) des Anwenderzugriffs an das Automatisierungsgerät (5) durch den Ticket-Agenten (9), und
c) wenn der Anwender über ein Ticket (8) verfügt, Validieren (19) des Tickets (8) durch das Automatisierungsgerät (5) und Erlauben des Zugriffs in Abhängigkeit von dem Validierungsergebnis.

5. Verfahren nach Anspruch 4, mit dem Schritt:
- automatisches Weiterleiten (15) des Anwenderzugriffs durch das Automatisierungsgerät (5) an den Ticket-Agenten (9).

6. Verfahren nach Anspruch 4 oder 5, **dadurch gekennzeichnet, dass** das Ticket (8) zeitlich begrenzt gültig ist.

7. Automatisierungssystem, welches mit Hilfe eines Projektierungsverfahrens mit folgenden Schritten projektiert wurde:
- Erzeugen (10) eines Automatisierungsprojektes (2),
- Erzeugen (11) einer Anwender-Datenbasis (3) für das Automatisierungsprojekt (2),
- Festlegen (12) eines Automatisierungsgerätes (4) innerhalb des Automatisierungsprojektes (2) als Ticket-Agent (9) zum späteren Authentifizieren eines Anwenders beim Zugriff auf ein Automatisierungsgerät (5) in dem Automatisierungssystem,
- Automatisches Erzeugen (13) von gemeinsamen Geheimnissen (Common Secrets), die zur Implementierung eines asymmetrischen Verschlüsselungsverfahrens erforderlich sind, zwischen dem Ticket-Agenten (9) und den Automatisierungsgeräten (5) des Automatisierungsprojektes (2) für deren Kommunikation,
wobei das Automatisierungssystem umfasst:
- ein erstes Automatisierungsgerät (5), aufweisend ein Authentifizierungsmodul (7) zum Prüfen (14), ob der Anwender über ein Ticket (8) verfügt und zum automatischen Weiterleiten (15) eines Anwenderzugriffs an den Ticket-Agenten (9), wenn der Anwender über kein Ticket (8) verfügt sowie zum Validieren (19) des Tickets (8) durch das Automatisierungsgerät (5) und Erlauben des Zugriffes in Abhängigkeit von dem Validierungsergebnis, wenn der Anwender über ein Ticket (8) verfügt und
- ein zweites Automatisierungsgerät (4) als Ticket-Agent (9) zum Authentifizieren (16) des Anwenders anhand der Anwender-Datenbasis (3), zum Erzeugen (17) eines Tickets (8) für den Zugriff auf das Automatisierungsgerät (5) sowie zum Weiterleiten (18) des Anwenderzugriffs auf das Automatisierungsgerät (5).

8. Computerprogramm zur Projektierung eines Automatisierungssystems
- mit Computerprogrammbefehlen zum Erzeugen (10) eines Automatisierungsprojektes (2),
- mit Computerprogrammbefehlen zum Erzeugen (11) einer Anwender-Datenbasis (3) für das Automatisierungsprojekt (2),
- mit Computerprogrammbefehlen zum Festlegen (12) eines Automatisierungsgerätes (4) innerhalb des Automatisierungsprojektes (2) als Ticket-Agent (9) zum späteren Authentifizieren eines Anwenders beim Zugriff auf ein Automatisierungsgerät (5) in dem Automatisierungssystem und
- mit Computerprogrammbefehlen zum automatischen Erzeugen (13) von gemeinsamen Geheimnissen (Common Secrets), die zur Implementierung eines asymmetrischen Verschlüsselungsverfahrens erforderlich sind, zwischen dem Ticket-Agenten (9) und den Automatisierungsgeräten (5) des Automatisierungsprojektes (2) für deren Kommunikation.

## Claims

1. Method for planning an automation system project with the steps:
- Generate (10) an automation project (2),
- Generate (11) a user database (3) for the automation project (2),
- Determine (12) an automation device (4) within the automation project (2) as a ticket agent (9) for subsequently authenticating a user during access to an automation device (5) in the automation system project,
- Automatically generate (13) common secrets, which are needed to implement an asymmetrical encryption process, for the communication between the ticket agent (9) and the automation devices (5) of the automation project (2).

2. Method according to claim 1, with the step:
- Assign the user database (3) for the automation project (2) to the ticket agent (9).

3. Method according to claim 1 or 2, with the step:
- automatic disclosure of the address of the ticket agent (4) to all further automation devices (5).

4. Method for authenticating a user during access to an automation device (5) in an automation system which was planned with the help of a planning method with the hollowing steps:
Generate (10) an automation project (2),
- Generate (11) a user database (3) for the automation project (2),
- Determine (12) an automation device (4) within the automation project (2) as a ticket agent (9) for subsequently authenticating a user during access to an automation device (5) in the automation system project,
- Automatically generate (13) common secrets, which are needed to implement an asymmetrical encryption process, for the communication between the ticket agent (9) and the automation devices (5) of the automation project (2).
whereby the method for authenticating includes the hollowing steps:
a) Examine (14) by means of the automation device (5), whether the user has a ticket (8),
b) if the user has no ticket (8), authenticate (16) the user by means of the ticket agent (9) based on the user database (3), generate (17) a ticket (8) for the access to the automation device (5) by means of the ticket agent (4) and forward (18) the user access to the automation device (5) by means of the ticket agent (9), and
c) if the user has a ticket (8), validate (19) the ticket (8) by means of the automation device (5) and allow the access as a function of the validation result.

5. Method according to claim 4, with the step:
- automatic routing (15) of the user access through the automation device (5) to the ticket agent (9).

6. Method according to claim 4 or 5, **characterized in that** the ticket (8) is valid in a temporally restricted manner.

7. Automation system which was planned with the help of a planning method with the hollowing steps:
- Generate (10) an automation project (2),
- Generate (11) a user database (3) for the automation project (2),
- Determine (12) an automation device (4) within the automation project (2) as a ticket agent (9) for subsequently authenticating a user during access to an automation device (5) in the automation system,
- Automatically generate (13) common secrets, which are needed to implement an asymmetrical encryption process, for the communication between the ticket agent (9) and the automation devices (5) of the automation project (2).
whereby the automation system project includes:
- a first automation device (5), comprising an authentication module (7) for examining (14) whether the user has a ticket (8) and for automatically routing (125) a user access to the ticket agent (9), if the user has no ticket (8) and for validating (19) the ticket (8) by the automation device (5) and allowing the access as a function of the validation result, if the user has a ticket (8) and
- a second automation device (4) as a ticket agent (9) for authenticating (16) the user based on the user database (3) for generating (17) a ticket (8) for the access to the automation device (5) and for routing (18) the user access to the automation device (5).

8. Computer program for planning an automation system project
- with computer program commands for generating (10) an automation project (2),
- with computer program commands for generating (11) a user database (3) for the automation project (2),
- with computer program commands for determining (12) an automation device (4) within the automation project (2) as a ticket agent (9) for subsequently authenticating a user during access to an automation device (5) in the automation system and and
- with computer program commands for automatically generating (13) common secrets, which are needed to implement an asymmetrical encryption process, for the communication between the ticket agents (9) and the automation devices (5) of the automation project (2).

## Revendications

1. Procédé pour faire un projet d'un système d'automatisation, comprenant les stades :
- on produit ( 10 ) un projet ( 2 ) d'automatisation,
- on produit ( 11 ) une base ( 13 ) de données utilisateur pour le projet ( 2 ) d'automatisation,
- on détermine ( 12 ) un appareil ( 4 ) d'automatisation dans le projet ( 2 ) d'automatisation comme agent de ticket ( 9 ) pour l'authentification ultérieure d'un utilisateur lors de l'accès à l'appareil ( 5 ) d'automatisation dans le système d'automatisation,
- on produit ( 13 ) automatiquement des secrets communs ( Common Secrets ) qui sont nécessaires pour la mise en oeuvre d'un procédé de chiffrement dissymétrique entre l'agent de ticket ( 9 ) et les appareils ( 5 ) d'automatisation du projet ( 2 ) d'automatisation pour leur communication.

2. Procédé suivant la revendication 1, comprenant un stade :
- on affecte la base ( 3 ) de données utilisateur pour le projet ( 2 ) d'automatisation à l'agent de ticket ( 9 ).

3. Procédé suivant la revendication 1 ou 2, comprenant le stades :
- on fait connaître automatiquement l'adresse de l'agent de ticket ( 4 ) à tous les autres appareils ( 5 ) d'automatisation.

4. Procédé d'authentification d'un utilisateur lors de l'accès à un appareil ( 5 ) d'automatisation dans un système d'automatisation, dont le projet a été fait à l'aide d'un procédé pour faire un projet ayant les stades suivants :
- on produit ( 10 ) un projet ( 2 ) d'automatisation,
- on produit ( 11 ) une base ( 13 ) de données utilisateur pour le projet ( 2 ) d'automatisation,
- on détermine ( 12 ) un appareil ( 4 ) d'automatisation dans le projet ( 2 ) d'automatisation comme agent de ticket ( 9 ) pour l'authentification ultérieure d'un utilisateur lors de l'accès à l'appareil ( 5 ) d'automatisation dans le système d'automatisation,
- on produit ( 13 ) automatiquement des secrets communs ( Common Secrets ) qui sont nécessaires pour la mise en oeuvre d'un procédé de chiffrement dissymétrique entre l'agent de ticket ( 9 ) et les appareils ( 5 ) d'automatisation du projet ( 2 ) d'automatisation pour leur communication,
dans lequel le procédé d'authentification comprend les stades suivants :
a) on contrôle ( 14 ) par l'appareil ( 5 ) d'automatisation si l'utilisateur dispose d'un ticket ( 8 ),
b) lorsque l'utilisateur ne dispose pas de ticket ( 8 ), on authentifie ( 7 ) l'utilisateur par l'agent de ticket ( 9 ) au moyen de la base ( 3 ) de données utilisateur, on produit ( 17 ) un ticket ( 8 ) pour l'accès à l'appareil ( 5 ) d'automatisation par l'agent de ticket ( 4 ) et on achemine ( 18 ) l'accès utilisateur à l'appareil ( 5 ) d'automatisation par l'agent de ticket ( 9 ), et
c) lorsque l'utilisateur dispose d'un ticket ( 8 ), on valide ( 19 ) le ticket ( 8 ) par l'appareil ( 5 ) d'automatisation et on autorise l'accès en fonction du résultat de la validation.

5. Procédé suivant la revendication 4, comprenant le stade :
- on achemine ( 15 ) automatiquement l'accès utilisateur par l'appareil ( 5 ) d'automatisation à l'agent de ticket ( 9 ).

6. Procédé suivant la revendication 4 ou 5, **caractérisé en ce** le ticket ( 8 ) a une validité limitée dans le temps.

7. Système d'automatisation, dont on a fait le projet à l'aide d'un procédé pour faire un projet ayant les stades suivants:
- on produit ( 10 ) un projet ( 2 ) d'automatisation,
- on produit ( 11 ) une base ( 13 ) de données utilisateur pour le projet ( 2 ) d'automatisation,
- on détermine ( 12 ) un appareil ( 4 ) d'automatisation dans le projet ( 2 ) d'automatisation comme agent de ticket ( 9 ) pour l'authentification ultérieure d'un utilisateur lors de l'accès à l'appareil ( 5 ) d'automatisation dans le système d'automatisation,
- on produit ( 13 ) automatiquement des secrets communs ( Common Secrets ) qui sont nécessaires pour la mise en oeuvre d'un procédé de chiffrement dissymétrique entre l'agent de ticket ( 9 ) et les appareils ( 5 ) d'automatisation du projet ( 2 ) d'automatisation pour leur communication,
dans lequel, le système d'automatisation comprend :
- un premier appareil ( 5 ) d'automatisation ayant un module ( 7 ) d'authentification pour contrôler ( 14 ) si l'utilisateur dispose d'un ticket ( 8 ) et pour acheminer ( 15 ) automatiquement un accès utilisateur à l'agent de ticket ( 9 ) si l'utilisateur ne dispose pas de ticket ( 8 ) ainsi que pour valider ( 19 ) le ticket ( 8 ) par l'appareil ( 5 ) d'automatisation et permettre l'accès en fonction du résultat de la validation si l'utilisateur dispose d'un ticket ( 8 ) et
- un deuxième appareil ( 4 ) d'automatisation comme agent de ticket ( 9 ) pour l'authentification ( 16 ) de l'utilisateur au moyen de la base ( 3 ) de données utilisateur pour la production ( 17 ) d'un ticket ( 8 ) pour l'accès à l'appareil ( 5 ) d'automatisation ainsi que pour l'acheminement ( 18 ) de l'accès utilisateur à l'appareil ( 5 ) d'automatisation.

8. Programme informatique pour faire un projet d'un système d'automatisation
- comprenant des instructions de programme informatique pour la production ( 10 ) d'un projet ( 2 ) d'automatisation,
- des instructions de programme informatiques pour la production ( 11 ) d'une base ( 3 ) de données utilisateur pour le projet ( 2 ) d'automatisation,
- comprenant des instructions de programme informatique pour la détermination ( 12 ) d'un appareil ( 14 ) d'automatisation dans le projet ( 2 ) d'automatisation comme agent de ticket ( 9 ) pour l'authentification ultérieure d'un utilisateur lors de l'accès à un appareil ( 5 ) d'automatisation dans le système d'automatisation et
- comprenant des instructions de programme informatique pour la production ( 13 ) automatique de secrets commun ( Common Secrets ) qui sont nécessaires pour la mise en oeuvre d'un procédé de chiffrement dissymétrique entre l'agent de ticket ( 9 ) et les appareils ( 5 ) d'automatisation du projet ( 2 ) d'automatisation pour leur communication.
